# EUROPEAN PATENT SPECIFICATION

(11) **EP 2 935 747 B1**
(45) Date of publication and mention of the grant of the patent: **29.08.2018**
(21) Application number: 13828848.5
(22) Date of filing: 19.12.2013
(51) Int. Cl.: E05F 15/635, E05F 15/652

(54) **LINEAR ACTUATOR, PARTICULARLY FOR SLIDING DOORS AND SLIDING CLOSURE ELEMENTS IN GENERAL**
LINEARANTRIEB, INSBESONDERE FÜR SCHIEBETÜREN UND SCHIEBEVERSCHLUSSELEMENTE IM ALLGEMEINEN
ACTIONNEUR LINÉAIRE, EN PARTICULIER POUR DES PORTES COULISSANTES ET, EN GÉNÉRAL, POUR DES ÉLÉMENTS DE FERMETURE COULISSANTS

(30) Priority: 20.12.2012 IT PD20120395
(43) Date of publication of application: 28.10.2015
(73) Proprietor: Topp Srl a socio unico, 36066 Sandrigo (VI) (IT)
(72) Inventor: CAVALCANTE, Toni, I-36031 Dueville (IT)
(74) Representative: Modiano, Micaela Nadia
(86) International application number: PCT/IB2013/061144
(87) International publication number: WO 2014/097211

(56) References cited:
- EP-A2- 0 631 031
- WO-A1-03/014507
- FR-A1- 2 968 346

## Description

The present invention relates to a linear actuator, particularly for sliding doors and for sliding closure elements in general.

Currently, in the field of the automation of homes and living spaces in general, the use of actuators to open and close internal doors is increasingly widespread.

However, in the field of homes and offices, the automation of sliding translating doors, including what are called "in-wall sliding doors", is currently still infrequent, since said translating in-wall sliding doors are normally installed to be moved manually and a subsequent installation of actuation means to automate the translation of the leaf is relatively complicated and inconvenient.

In general, mainly the following types of automatic actuators are used currently to move sliding closure elements.

A first type of automatic actuator provides for a motor, which can be provided with a reduction unit or not, with a mechanism of the rack and pinion type, said rack being associated with the moving part, for example an outdoor gate.

Such an actuator, which is widespread for moving outdoor gates or in the field of doors of industrial buildings, is generally scarcely precise in its mechanical elements and is therefore noisy; moreover, its motor is normally arranged so as to operate with a vertical axis and therefore transversely to the direction of longitudinal extension of the rack and of the gate to which the rack is fixed; this arrangement of the motor is to be considered bulky as a whole, in particular if applied to a door or a closure element in general of a domestic environment.

Examples of such an application are to be found in patent documents EP1672151 in the name of Hamada Kousyou Co. Ltd and EP1325996 in the name of Bertolouse - Cutrupi - Salerno. EP 0 631 031 A2 also discloses an actuator of this type. A second type of automatic actuator provides for a motor, which can be equipped with a reduction unit or not and which moves the movable part by means of a belt or chain mechanism.

Resorting to a belt or chain has considerable disadvantages linked to the fact that said belt and chain are components that have to be adjusted after sales, during installation, and to the fact that they are particularly noisy and bulky transmissions and therefore scarcely suitable for a domestic installation.

A third type of automatic actuator has a motor, which can be provided with a reduction unit or not and which is adapted to move a leaf by means of a lever system, a solution which, however, is expensive and very bulky.

A fourth type of automatic actuator has a motor, which can be provided with a reduction unit or not and which moves the movable part by using a rotor with magnets or electromagnets and a rail that also has magnetic elements.

Although these products are technically and functionally excellent, they are of high quality and therefore very expensive both in terms of production and accordingly in terms of final cost for a purchaser. EP 2527579 discloses an actuator that comprises a supporting body, to be fixed by corresponding fixing means between the two jambs of a door or closure element, motor drive means being accommodated and fixed in said supporting body and being adapted to rotate a driving gear designed to mesh with a driven rack, which in turn is fixed to a leaf of the door to be translated, the axis of rotation of the worm gear being substantially parallel to the longitudinal direction of the rack; said driving gear is constituted by a screw element, the thread of which is adapted to engage between the oblique teeth of the rack.

Although this linear actuator is functional and fully capable of obviating the limitations of the cited background art, it is not free from aspects that can be improved.

The sizing and precision with which the threads of the screw element are manufactured are fundamentally important and likewise the finish of the contact surface between the screw element and the rack is decisive as regards the noise and wear of the components during the entire life of the actuator.

The diameter of the screw element, the number of simultaneously meshing threads, the helix angle of said screw element and the pressure angle are fundamental parameters for optimum and efficient operation of such a linear actuator and the incorrect choice of one of these parameters can cause noise, high current absorption, overheating, jamming, and other similar problems.

The reversibility of the linear actuator, i.e., the possibility of translating the leaf, or the rack fixed to the leaf, manually, without the screw element jamming, preventing this movement, so as to enable a user to open and close the door to which the linear actuator is applied even in the absence of electric power that supplies the actuator, such as for example in case of a blackout, is equally important for currently applicable statutory provisions.

The aim of the present invention is to provide a linear actuator particularly for sliding doors and for sliding closure elements in general that is capable of obviating the limitations of known linear actuators.

Within the scope of this aim, an object of the invention is to provide a linear actuator that is capable of ensuring a lower wear of the components and a higher efficiency than the background art.

Another object of the invention is to provide a linear actuator that is reversible and therefore safe even in the absence of electric power.

A further object of the invention is to provide a linear actuator the assembly of which is easy to understand and quick to provide.

Another object of the invention is to provide a linear actuator that is capable of transmitting power so as to provide a translational motion of the leaf which is continuous and stable even for particularly heavy leaves.

Another object of the invention is to provide a linear actuator that can adapt easily to the width of the opening of the door for which it is intended.

Another object of the invention is to provide a linear actuator that is compact and can be applied to leaves made of any material.

Another object of the invention is to provide a linear actuator particularly for sliding doors and for sliding closure elements in general that can be manufactured with known systems and technologies.

In accordance with the invention, there is provided a linear actuator as defined in the appended claims.

Further characteristics and advantages of the invention will become more apparent from the description of a preferred but not exclusive embodiment of the linear actuator according to the invention, illustrated by way of non-limiting example in the accompanying drawings, wherein:

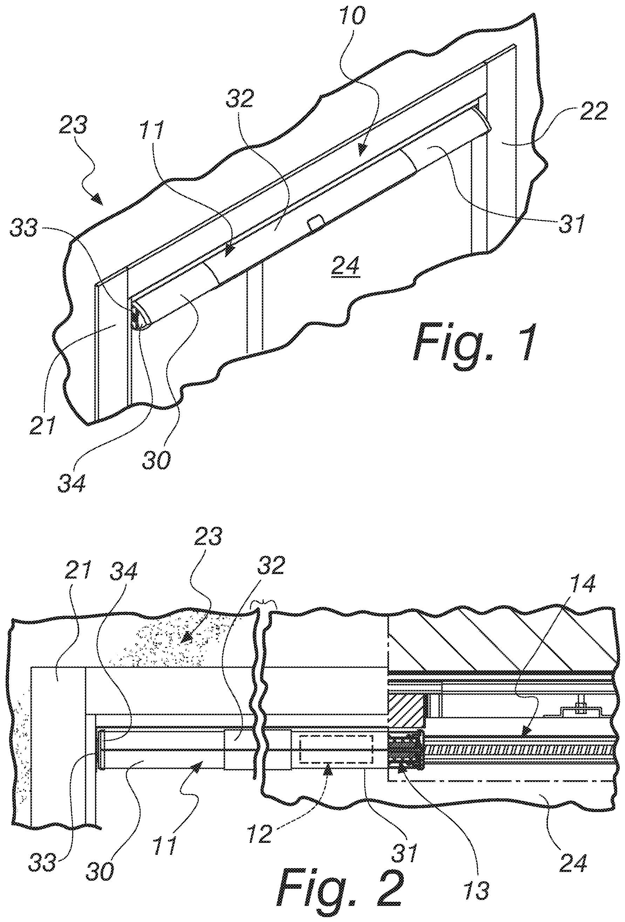

Figure 1 is a perspective view of an actuator according to the invention applied to a door;
Figure 2 is a partially sectional front view of the actuator of Figure 1;
Figure 3 is a perspective cutout view of an actuator which is not according to the invention;
Figure 4 is a longitudinal sectional view of the actuator according to the invention;
Figure 5 is a side view of the worm gear of an actuator according to the invention;
Figure 5a is a sectional view of a detail of Figure 5;
Figure 6 is a front view of a portion of a rack of an actuator which is not according to the invention;
Figures 7 to 9 are views of the rack of an actuator according to the invention.

With reference to the cited figures, a linear actuator particularly for sliding doors and for sliding closure elements in general according to the invention is generally designated by the reference numeral 10.

Said linear actuator 10 is of the type that comprises a supporting body 11, to be arranged for example, fixed by corresponding fixing means, between the two jambs 21 and 22 of a door 23 or of a closure element.

Motor drive means 12 are accommodated and fixed in said supporting body 11 and are adapted to rotate a driving worm gear 13, designed to be meshed with a driven rack 14, which in turn is fixed to a leaf 24 of the door 23 to be translated.

The rotation axis 15 of the worm gear 13 is substantially parallel to the longitudinal direction of said rack 14.

The thread 16 of said worm gear 13 is adapted to mesh with the oblique teeth 17 of said rack 14.

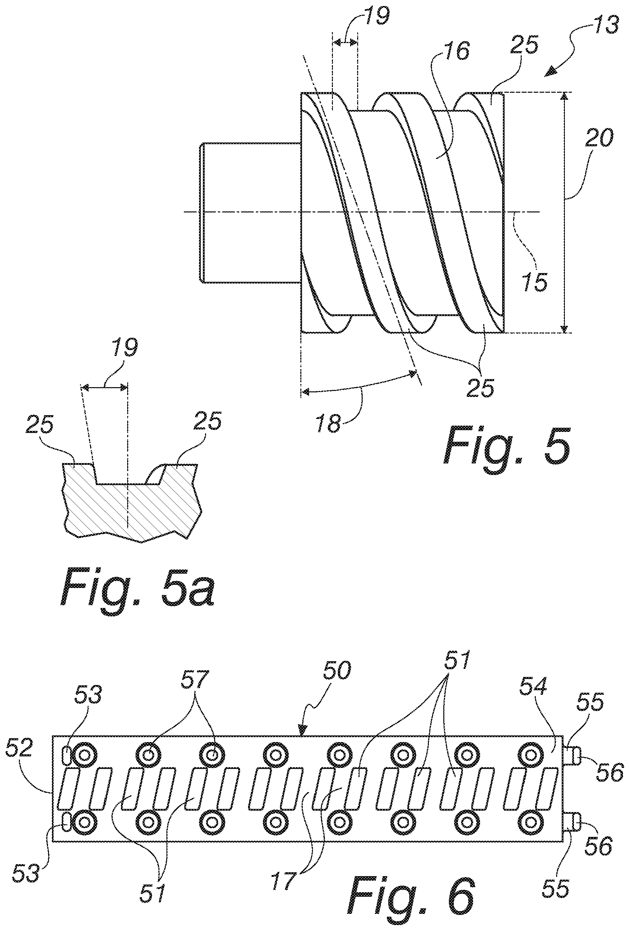

In the linear actuator 10 according to the invention,
- the angle of inclination of the helix 18, Figure 5, of the thread 16 is comprised in the interval between 15° and 25°,
- and the pressure angle 19 of the thread 16 on the oblique teeth 17 of the rack 14 is comprised in an interval between 0.5° and 15°.

In particular, the pressure angle 19 of the thread 16 on the oblique teeth 17 of the rack 14 is preferably 1°.

The angle of inclination of the helix 18 of the thread 16 is preferably 19.65°.

Furthermore, the outside diameter 20 of the worm gear 13 is comprised in an interval between 25 and 50 mm and is preferably 35 mm.

Furthermore, the number of starts 25 of the thread 16 is comprised between 1 and 3, and in the present constructive example these starts are 2, where the term "starts" designates the number of turns of thread that wind around the surface of the screw.

The present technical solution is the result of research, practical tests and developments achieved by means of calculations, software simulations and tests, until the values of the above-cited parameters that characterize the worm gear 13 and the rack 14 were determined.

In particular, it has been verified that an excessively steep helix angle 18 entails for example an increase in electric current absorbed by the actuator 10 and a consequent overheating of the system.

A helix inclination angle 18 beyond 25° in fact causes a great increase in the torque required for actuation, whereas if the helix angle 18 is too small, below 15°, irreversibility of the actuator 10, i.e., the impossibility of translating manually the leaf to which the rack 14 is fixed if the actuator is not supplied with electric power, is caused.

As regards the pressure angle 19, it has been found that in case of an excessively high value, beyond 15°, intense real thrusts are generated which tend to move the worm gear 13 away from the rack 14, with negative consequences on the mating process.

As regards the outside diameter 20 of the worm gear 13, it has been observed that a value of less than 30 mm would entail a sizing of the transmission and reduction gears 26 in output from the driving shaft 27 which is such as to cause interference between the final gear 28 and the rack 14, where any direct mating between the motor 12 and the worm gear 13 would require an excessively small motor for the required performance, and in addition to this higher-rate rotations of the motor 12 of the entire reduction unit 26 and of the worm screw 13 would occur, with a consequent increase in noise.

An outside diameter 20 of more than 50 mm, on the other hand, would entail overall space occupations that are considered excessive.

The description of the linear actuator 10 is completed hereafter.

The motor drive means 12 are constituted by an electric motor, the driving shaft 27 of which actuates, by means of the reduction gears 26, a second shaft 29, on which the final gear 28 of the reduction unit 26 and the worm gear 13 are mounted.

In the present constructive example, the supporting body 11 is substantially tubular.

Advantageously, the supporting body 11 is telescopic, thanks to the ability of two opposite lateral portions thereof 30 and 31 to be extracted with respect to the central part 32.

The telescopic nature of the supporting body 11 allows its adaptability to doors that have passage openings of different widths.

The embodiment, not shown for the sake of simplicity, in which the supporting body is constituted by a single non-telescopic housing, is of course to be understood as part of the invention.

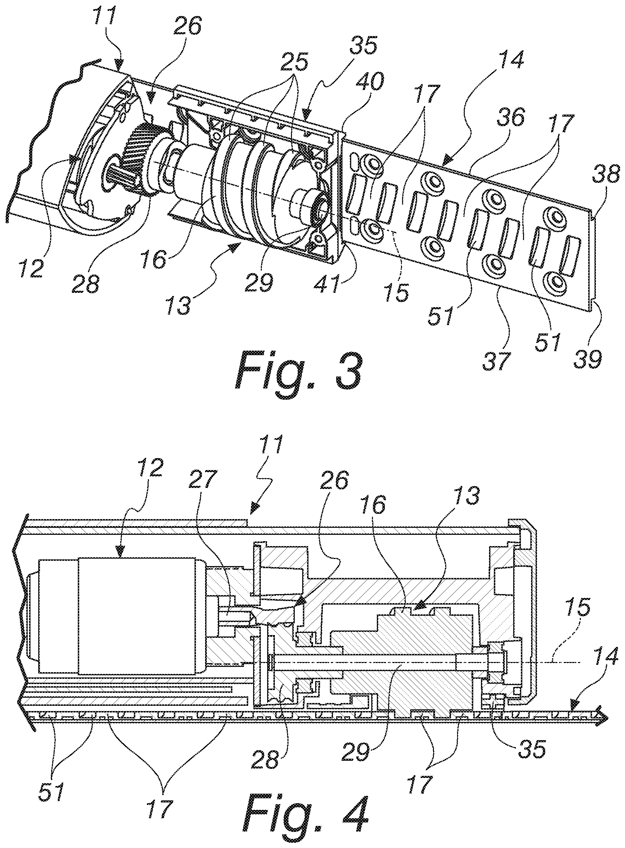

The supporting body 11 is fixed at one side to a jamb 21 by means of a metallic bracket 33 and corresponding threaded elements for fixing to the jamb and to the lateral cover 34 of said supporting body 11, and at the opposite side by means of a slider 35, clearly visible in Figure 3, which is engaged so as to slide on the rack 14.

The rack 14, which is not part of the invention, has, at its long sides 36 and 37, longitudinal grooves 38 and 39 respectively, which are adapted to accommodate the engagement and sliding tabs 40 and 41 that protrude from the slider 35.

Said slider 35 is fixed to the supporting body 11 at the worm gear 13 and has an opening adapted to allow the engagement of the thread 16 of said worm gear 13 with the rack 14.

The fixing of the slider 35 to the supporting body 11 occurs for example by means of screws, which are not shown for the sake of simplicity.

An important particularity of the invention resides in the structure of the rack 14. The rack 14, which is not part of the invention, is constituted by a plurality of modular elements 50, one of which is shown in Figure 6 and each of which is provided with equidistant inclined recesses 51 that form between them the teeth 17 of said rack 14.

The rack 14 comprises means for the ordered side-by-side arrangement and alignment of a row of modular elements 50.

Said alignment and side-by-side arrangement means are constituted by means for engagement with another identical laterally adjacent modular element 50, which are formed at the opposite ends of each modular element 50.

Said means for the engagement of a modular element 50 with another identical laterally adjacent modular element are constituted for example at a first end 52 by two holes 53, at the opposite second end 54 by two wings 55 with a tooth 56 for engagement in the corresponding holes 53 of another identical modular element 50.

There are additional holes 57 for fixing, by means of screws, the modular elements 50 that are engaged in a row with a leaf made for example of wooden material.

Each modular element 50 has a thickness comprised between 1 mm and 6 mm, so as to adapt well to any in-wall sliding door.

Said modular elements 50 are provided by molding plastic material.

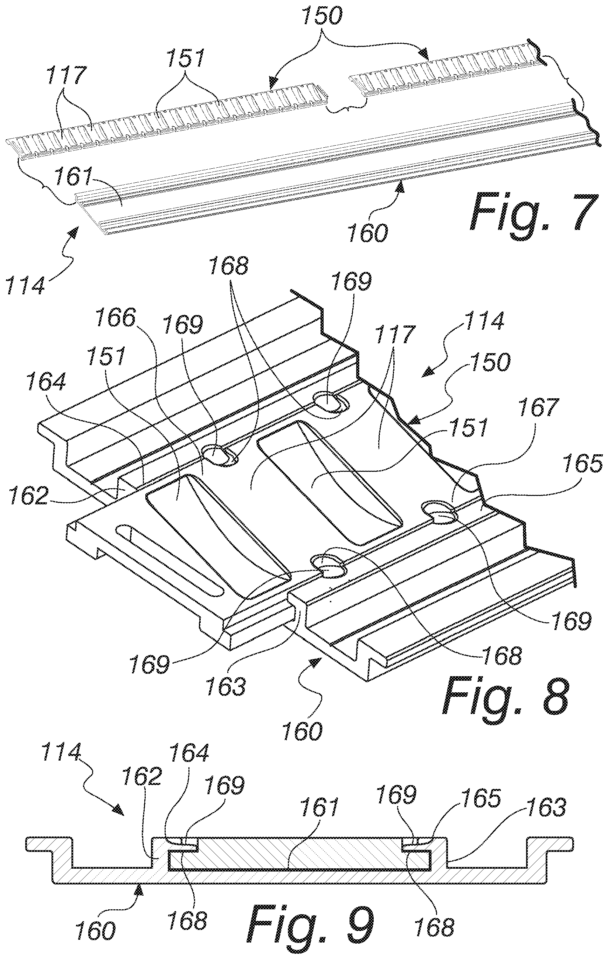

According to the invention as defined in the appended claims, the means for ordered alignment and side-by-side arrangement of a row of modular elements 150 of the rack, shown in Figures 7 to 9 and designated therein by the reference numeral 114, are constituted by a base 160 made of metallic material, with a central channel 161 for a plurality of laterally adjacent consecutive modular flat elements 150 provided with the inclined recesses 151 that form between them the teeth 117 of said rack.

The base 160 is constituted by a predominantly longitudinally extending metallic profile and is obtained by extrusion or molding.

The central channel 161 is formed by two opposite longitudinal side walls 162 and 163 with lifting-preventing tabs 164 and 165 for said modular flat elements 150.

The modular flat elements 150 have, on their longitudinal edges 166 and 167, recesses 168 adapted to receive corresponding locking teeth 169 that are provided by plastic deformation on said lifting-preventing tabs 164 and 165 of said longitudinal side walls of said base 160.

Said rack 114, with the base 160 made of metallic material, is well suited for application, for example by adhesive bonding, on leaves made of glass or crystal or metallic material.

The invention relates to a rack 114 for linear actuators particularly for sliding doors and sliding closure elements in general, of the type comprising a supporting body 11, to be arranged between the two jambs of a door or a closure element, motor drive means 12 being accommodated and fixed in said supporting body 11 and being adapted to rotate a driving worm gear 13, designed to be meshed with said driven rack 114, which in turn is fixed to leaf of a door or other closure element to be translated, with the rotation axis 15 of the worm gear 13 substantially parallel to the direction of longitudinal extension of the rack 114, the thread 16 of the worm gear 13 being adapted to mesh with the oblique teeth 117 of the rack 114.

Said rack 114 comprises a base 160 made of metallic material with a central channel 161 for a plurality of laterally adjacent consecutive modular flat elements 150, provided with the inclined recesses 151, which form between them the teeth 117 of said rack 114.

As already mentioned above, the central channel 161 is formed by two opposite longitudinal side walls 162 and 163 with lifting preventing tabs 164 and 165 for the modular flat elements 150.

The modular flat elements 150 have, in their longitudinal edges 166 and 167, recesses 168 adapted to receive corresponding locking teeth 169 provided by plastic deformation on said lifting preventing tabs 164 and 165 of said longitudinal side walls of said base 160.

In practice it has been found that the invention achieves the intended aim and objects.

In particular, the invention provides a linear actuator that is capable of ensuring a lower wear of the components and a higher efficiency than the background art, thanks to the specific geometrical particularities described above for the worm gear 13 and the rack 114. Moreover, the invention provides a linear actuator that is reversible and therefore safe even in the absence of electric power supply.

Moreover, the invention provides a linear actuator the assembly of which is simple to understand and quick to provide.

Moreover, the invention provides a rack for linear actuators that is simple, low-cost and quick to install even in the few spaces available for the leaves of in-wall sliding doors.

Moreover, the invention provides a rack that can be adapted easily to the width of the leaf of the door for which it is intended.

Moreover, the invention provides a linear actuator that is compact and can be applied to leaves made of any material.

In particular, the linear actuator according to the invention is particularly advantageous because it has a small number of components and therefore its assembly is quick and safe thanks to the study of the plays and the placement of the fixing screws.

Its installation is swift, since there are no mechanical or magnetic couplings and it is sufficient to center the threads of the worm gear on the rack.

The thin rack can be applied in most situations that occur, for example between the door and the wall or between the door and the door casing in the case for example of in-wall sliding doors.

Another important advantage of the linear actuator according to the invention is that it does not need post-installation adjustments.

The invention thus conceived is susceptible of numerous modifications and variations, all of which are within the scope of the inventive concept: all the details may furthermore be replaced with other technically equivalent elements.

In practice, the materials used, so long as they are compatible with the specific use, as well as the contingent shapes and dimensions, may be any according to the requirements and the state of the art.

## Claims

1. A linear actuator (10), particularly for sliding doors and sliding closure elements in general, of the type comprising a supporting body (11), to be arranged between the two jambs of a door or of a closure element, motor drive means (12) being accommodated and fixed in said supporting body (11) and being adapted to rotate a driving worm gear (13) meshing with a driven rack (114) of the linear actuator (10), which in turn is fixed to a leaf of a door or other closure element to be translated, the axis of rotation (15) of the worm gear (13) being substantially parallel to the longitudinal direction of said rack (114), the thread (16) of said worm gear (13) being adapted to mesh with the oblique teeth (117) of said rack (114), said rack (114) being constituted by a plurality of modular elements (150), each of which is provided with equidistant inclined recesses (151) that form between them the oblique teeth (117) of said rack (114), said rack (114) comprising means for the ordered side-by-side arrangement and alignment of a row of modular elements (150), said means for the ordered side-by-side arrangement and alignment of a row of modular elements (150) comprising a base (160) made of metallic material with a central channel (161) for a plurality of laterally adjacent consecutive modular flat elements (150) provided with inclined recesses (151) that form between them the oblique teeth (117) of said rack (114), said base (160) being constituted by a profile that extends predominantly longitudinally and being obtained by extrusion or molding, said central channel (161) being formed by two opposite longitudinal side walls (162, 163) with tabs (164, 165) for preventing lifting for said modular flat elements (150), said modular flat elements (150) having, in their longitudinal edges, recesses (168) adapted to receive corresponding locking teeth (169) provided by plastic deformation on said lifting-preventing tabs (164, 165) of said longitudinal side walls of said base (160).

2. The actuator according to claim 1, **characterized in that** said rack (114) has a thickness comprised in an interval between 1 mm and 6 mm.

3. The actuator according to one or more of the preceding claims, **characterized in that** the angle of inclination of the helix (18) of said thread (16) is comprised in the interval between 15° and 25°.

4. The actuator according to claim 3, **characterized in that** said angle of inclination of the helix (18) of said thread (16) is 19.65°.

5. The actuator according to claim 4, **characterized in that** the pressure angle (19) of the thread (16) on the oblique teeth (117) of said rack (114) is comprised in an interval between 0.5° and 15°.

6. The actuator according to claim 5, **characterized in that** said pressure angle (19) of the thread (16) on the oblique teeth (117) of said rack (114) is 1°.

7. The actuator according to one or more of the preceding claims, **characterized in that** the outside diameter (20) of said worm gear (13) is comprised in an interval between 25 mm and 50 mm.

8. The actuator according to one or more of the preceding claims, **characterized in that** the outside diameter (20) of said worm gear (13) is 35 mm.

9. The actuator according to one or more of the preceding claims, **characterized in that** the number of starts (25) of said thread (16) is comprised between 1 and 3.

10. The actuator according to claim 9, **characterized in that** the number of starts (25) of said thread (16) is 2.

## Patentansprüche

1. Ein Linearantrieb (10), insbesondere für Schiebetüren und Schiebeverschlusselemente im Allgemeinen, von der Art, die einen tragenden Körper (11) umfasst, anzuordnen zwischen den beiden Pfosten einer Tür oder eines Verschlusselements, wobei Motorantriebsmittel (12) in dem tragenden Körper (11) untergebracht und befestigt und ausgebildet sind, um einen Schneckentrieb (13) zu drehen, der in eine angetriebene Zahnstange (114) des Linearantriebs (10) eingreift, die wiederum an einem Blatt einer Tür oder eines anderen Verschlusselements, das bewegt werden soll, befestigt ist; wobei die Drehachse (15) des Schneckentriebs (13) im Wesentlichen parallel zur Längsrichtung der Zahnstange (114) ist, wobei das Gewinde (16) des Schneckentriebs (13) ausgebildet ist, um mit den schrägen Zähnen (117) der Zahnstange (114) in Eingriff zu stehen, wobei die Zahnstange (114) aus einer Vielzahl modularer Elemente (150) besteht, von denen jedes mit äquidistanten schrägen Vertiefungen (151) versehen ist, die zwischen sich die schrägen Zähne (117) der Zahnstange (114) bilden; wobei die Zahnstange (114) Mittel für die nebeneinander geordnete Anordnung und Ausrichtung einer Reihe modularer Elemente (150) umfasst, wobei die Mittel für die nebeneinander geordnete Anordnung und Ausrichtung einer Reihe modularer Elemente (150) eine Basis (160) aus Metallmaterial mit einem zentralen Kanal (161) für eine Vielzahl seitlich benachbarter aufeinander folgender modularer flacher Elemente (150) umfassen, die mit schrägen Vertiefungen (151) versehen sind, die zwischen sich die schrägen Zähne (117) der Zahnstange (114) bilden; wobei die Basis (160) aus einem Profil besteht, das sich hauptsächlich in Längsrichtung erstreckt und durch Strangpressen oder Formen hergestellt wird; wobei der zentrale Kanal (161) von zwei gegenüberliegenden Längsseitenwänden (162, 163) gebildet wird, mit Nasen (164, 165) zum Verhindern des Anhebens der modularen flachen Elemente (150); wobei die modularen flachen Elemente (150) in ihren Längskanten Vertiefungen (168) haben, die ausgebildet sind, um entsprechende Sperrzähne (169) aufzunehmen, hergestellt durch plastische Verformung an den das Anheben verhindernden Nasen (164, 165) der Längsseitenwände der Basis (160).

2. Der Antrieb gemäß Anspruch 1, **dadurch gekennzeichnet, dass** die Zahnstange (114) eine Dicke hat, die in einer Bandbreite zwischen 1 mm und 6 mm liegt.

3. Der Antrieb gemäß einem oder mehreren der obigen Ansprüche, **dadurch gekennzeichnet, dass** der Neigungswinkel der Helix (18) des Gewindes (16) innerhalb der Bandbreite zwischen 15° und 25° liegt.

4. Der Antrieb gemäß Anspruch 3, **dadurch gekennzeichnet, dass** der Neigungswinkel der Helix (18) des Gewindes (16) 19,65° beträgt.

5. Der Antrieb gemäß Anspruch 4, **dadurch gekennzeichnet, dass** der Eingriffswinkel (19) des Gewindes (16) auf den schrägen Zähnen (117) der Zahnstange (114) innerhalb einer Bandbreite zwischen 0,5° und 15° liegt.

6. Der Antrieb gemäß Anspruch 5, **dadurch gekennzeichnet, dass** der Eingriffswinkel (19) des Gewindes (16) auf den schrägen Zähnen (117) der Zahnstange (114) 1° beträgt.

7. Der Antrieb gemäß einem oder mehreren der obigen Ansprüche, **dadurch gekennzeichnet, dass** der Außendurchmesser (20) des Schneckentriebs (13) innerhalb einer Bandbreite zwischen 25 mm und 50 mm liegt.

8. Der Antrieb gemäß einem oder mehreren der obigen Ansprüche, **dadurch gekennzeichnet, dass** der Außendurchmesser (20) des Schneckentriebs (13) 35mm beträgt.

9. Der Antrieb gemäß einem oder mehreren der obigen Ansprüche, **dadurch gekennzeichnet, dass** die Anzahl der Anschnitte (25) des Gewindes (16) zwischen 1 und 3 beträgt.

10. Der Antrieb gemäß Anspruch 9, **dadurch gekennzeichnet, dass** die Anzahl der Anschnitte (25) des Gewindes (16) 2 beträgt.

## Revendications

1. Actionneur linéaire (10), en particulier pour portes coulissante et éléments à fermeture coulissante, en général, du type comprenant un corps de support (11), à agencer entre les deux montants d'une porte ou d'un élément de fermeture, des moyens d'entraînement de moteur (12) étant logés et fixés dans ledit corps de support (11) et étant adaptés pour faire tourner un engrenage à vis sans fin d'entraînement (13) s'engrenant avec une crémaillère entraînée (114) de l'actionneur linéaire (10), qui est à son tour fixée sur un ventail d'une porte ou d'un autre élément de fermeture pour effectuer une translation, l'axe de rotation (15) de l'engrenage à vis sans fin (13) étant sensiblement parallèle à la direction longitudinale de ladite crémaillère (114), le filetage (16) dudit engrenage à vis sans fin (13) étant adapté pour s'engrener avec les dents obliques (117) de ladite crémaillère (114), ladite crémaillère (114) étant constituée par une pluralité d'éléments modulaires (150), dont chacun est prévu avec des évidements inclinés équidistants (151) qui forment entre eux les dents obliques (117) de ladite crémaillère (114), ladite crémaillère (114) comprenant des moyens pour l'agencement et l'alignement ordonné côte à côte d'une rangée d'éléments modulaires (150), lesdits moyens pour l'agencement et l'alignement ordonné côte à côte d'une rangée d'éléments modulaires (150) comprenant une base (160) réalisée avec un matériau métallique avec un canal central (161) pour une pluralité d'éléments plats modulaires consécutifs latéralement adjacents (150) prévus avec des évidements inclinés (151) qui forment entre eux les dents obliques (117) de ladite crémaillère (114), ladite base (160) étant constituée par un profilé qui s'étend principalement longitudinalement et étant obtenue par extrusion ou moulage, ledit canal central (161) étant formé par deux parois latérales longitudinales opposées (162, 163) avec des languettes (164, 165) pour empêcher le soulèvement desdits éléments plats modulaires (150), lesdits éléments plats modulaires (150) ayant, dans leurs bords longitudinaux, des évidements (168) adaptés pour recevoir des dents de verrouillage (169) correspondantes prévues par déformation plastique sur lesdites languettes anti-soulèvement (164, 165) desdites parois latérales longitudinales de ladite base (160).

2. Actionneur selon la revendication 1, **caractérisé en ce que** ladite crémaillère (114) a une épaisseur comprise dans un intervalle entre 1 mm et 6 mm.

3. Actionneur selon une ou plusieurs des revendications précédentes, **caractérisé en ce que** l'angle d'inclinaison de l'hélice (18) dudit filetage (16) est compris dans l'intervalle entre 15° et 25°.

4. Actionneur selon la revendication 3, **caractérisé en ce que** ledit angle d'inclinaison de l'hélice (18) dudit filetage (16) est de 19,65°.

5. Actionneur selon la revendication 4, **caractérisé en ce que** l'angle de pression (19) du filetage (16) sur les dents obliques (117) de ladite crémaillère (114) est compris dans un intervalle entre 0,5° et 15°.

6. Actionneur selon la revendication 5, **caractérisé en ce que** ledit angle de pression (19) du filetage (16) sur les dents obliques (117) de ladite crémaillère (114) est de 1°.

7. Actionneur selon une ou plusieurs des revendications précédentes, **caractérisé en ce que** le diamètre externe (20) dudit engrenage à vis sans fin (13) est compris dans un intervalle entre 25 mm et 50 mm.

8. Actionneur selon une ou plusieurs des revendications précédentes, **caractérisé en ce que** le diamètre externe (20) dudit engrenage à vis sans fin (13) est de 35 mm.

9. Actionneur selon une ou plusieurs des revendications précédentes, **caractérisé en ce que** le nombre de débuts (25) dudit filetage (16) est compris entre 1 et 3.

10. Actionneur selon la revendication 9, **caractérisé en ce que** le nombre de débuts (25) dudit filetage (16) est de 2.
